# EUROPEAN PATENT APPLICATION

(11) **EP 1 205 702 A2**
(43) Date of publication of application: **15.05.2002**
(21) Application number: 01302631.5
(22) Date of filing: 21.03.2001
(51) Int. Cl.: F16L 25/06

(54) **Expandable spigot**

(30) Priority: 08.11.2000 GB 0027217
(71) Applicant: Litestructures (GB) Ltd, South Kirby, Wakefield WF9 3NR (GB)
(72) Inventor: Chambers, Stewart, Normanton, WF6 1NT (GB); Warhurst, Ian James, Silkstone, Barnsley S75 4IIF (GB); Cuttle, Stephen William, Pontefract, West Yorkshire WF9 1JG (GB)
(74) Representative: Waddington, Richard

(57) **Abstract**

An expandable spigot (10) comprises a body portion (12) which holds a moveable block (14) in an interior central cavity (34). The first bolt (16) has a threaded portion (18) which is received in an opening in the moveable block (14), with a flange portion (20) of the bolt being retained in a cavity (22) formed in the body portion (12). In use anti-clockwise turning of the bolt (16) causes a head portion of the bolt (16) to move through an opening (26) and second, causes the moveable block (14) to move upwards through the body portion (12) causing the stud (28) to protrude from the body portion.

## Description

This invention relates to an expandable spigot and to a method of securing two tubes together.

An existing spigot for securing two sections of tubing together comprises a body portion to be inserted partially into the end of one piece of tubing and also partially into the end of a second piece of tubing. Openings in the two pieces of tubing are aligned with openings in the spigot for the insertion of fixing members, e.g. screws, through the tubing and into the spigot. Typically, fixings are located at both sides of the end of the tube (e.g upper and lower sides), so that four fixings, two for each tube, would be used in this example.

Disadvantages arise with this type of spigot because the fixings must be retained separately until located in the spigot. In this situation the fixings can easily be lost. Also, difficulties are encountered with aligning the sets of holes in the tubing and spigots respectively. Furthermore, the relative sizes of the spigot and tubes are important, because an inaccuracy in size may result in the spigot fitting loosely in the tubes or not fitting at all. Such inaccuracies lead to dangerously weak joints or joints which cannot be assembled.

According to one aspect of the present invention an expandable spigot comprises an elongate body portion and first locking means, wherein the body portion is adapted to be partially inserted into an end of a first tube, and partially inserted into an end of a second tube, wherein the first locking means are operable to be extended outwards from the body portion and to project into the first and second tubes to thereby hold said tubes in position relative to the expandable spigot.

The first locking means preferably comprises at least two locking members for each tube to be held in position, which locking members extend outwards from different locations on the body portion. The first locking means may comprise two sections, each having a pair of locking members, two for each tube to be locked in position. The locking members may be studs which project through openings in the tube.

The locking members of each pair preferably extend outwards from opposite sides of the body portion, preferably at about 180° to each other.

Preferably, the two locking members of a pair extend outwards upon actuation of one adjustment means. The locking members may be operable to extend outwards one after the other, preferably upon continued activation of the adjustment means.

The first locking means may comprise a first locking member being slidably engaged with the second locking member. Preferably the slidable engagement comprises one locking member being threaded and being received in corresponding tapped opening in the other locking member.

Preferably, the adjustment means is integral with one of the locking members, preferably the first. Turning of the first locking member preferably causes that locking member to extend outwards from the body portion. Further turning, preferably in the same direction, preferably causes a flange of the first locking member to bear against the body portion, thereby preventing further protrusion of the first locking member and thereby causing the second locking member to move away therefrom and extend outwards from the body portion.

The second locking member may include a projection, which is the part of the second locking member which extends outwards from the body portion.

The second locking member may be common to both sections of the first locking means, and may include two projections.

The expandable spigot may include second locking means, preferably comprising at least one, preferably two, flexible locking members. The flexible locking members may be located on the periphery of the body portion, forming part of an outer surface thereof. The flexible locking members are preferably biased inwardly.

Extension of the second locking member is preferably operable to urge the flexible locking members outwards. The second locking member preferably acts as a wedge between the flexible locking members. Preferably, the flexible locking members are urged against an inner wall of the tube, preferably in a tight-fitting manner. The pressure of the flexible locking members on the interior wall of the tube preferably creates sufficient friction to deter removal of the tube from the spigot.

Turning of the adjustment means in the opposite direction preferably causes both locking members to retract, and preferably causes the two flexible locking members to return to their inward bias. Preferably, the second locking member and the two flexible locking members retract first, followed by retraction of the first locking member.

The invention extends to an assembly comprising an expandable spigot as described above and two pieces of tubing for fixing with said spigot.

According to another aspect of the present invention a method of fixing first and second tubes together comprises placing a first end of an expandable spigot into an end of a first tube and causing a first section of a first locking means to extend outwards and project into the first tube to thereby hold the first tube relative to the spigot, and placing a second end of the expandable spigot into an end of a second tube and causing a second section of the first locking means to extend outwards and project into the second tube to thereby hold the second tube relative to the spigot and therefore hold the first tube relative to the second tube.

Preferably activation of one adjustment means causes the first section of the first locking means to extend two locking members outwards, and preferably activation of one adjustment means causes the second section of the first locking means to extend two locking members outwards.

The adjustment means may also operate second locking means, which may comprise two flexible locking members, which are preferably urged against an inner wall of the first tube or second tube to create a friction fit between the spigot and said tube.

According to a further aspect of the invention an expandable spigot comprises a body portion and second locking means, wherein the body portion is adapted to be partially inserted into an end of a first tube and partially inserted into an end of a second tube, and wherein the second locking means are operable to be extended outwards towards inner walls of the tubes by the action of a wedge member urging flexible locking members apart to thereby create a friction fit between the expandable spigot and the tubes.

The wedge member may be movable by means of a threaded bolt being received in the wedge member, said bolt being turnable to adjust the position of said wedge member.

All of the features disclosed herein may be combined with any of the above aspects in any combination.

A specific embodiment of the present invention will now be described, by way of example, with reference to the accompanying drawings, in which:
Figure 1 is a schematic end view of an expandable spigot in an unlocked configuration for insertion into a piece of tubing;
Figure 2 is schematic end view of the expandable spigot in a partially locked configuration located in a section of tubing;
Figure 3 is a schematic end of the expandable spigot in a fully locked configuration in a section of tubing;
Figure 4 is a schematic perspective view of the expandable spigot used to join two sections of tubing; and
Figure 5 is a schematic perspective view of the expandable spigot partially inserted into a section of tubing.

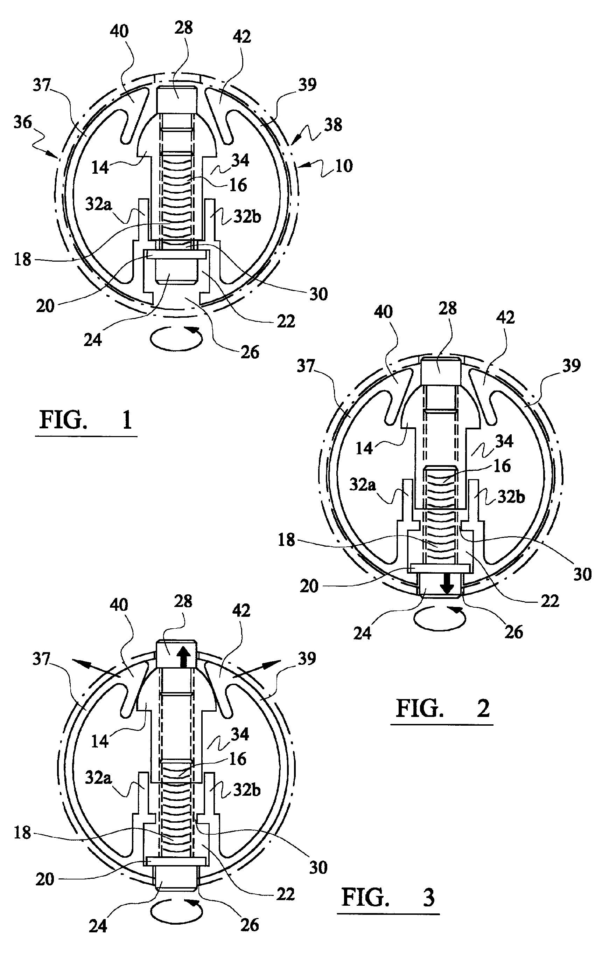

An expandable spigot 10 comprises a body portion 12 which holds a movable block 14 in an interior central cavity 34 thereof. A first bolt 16 has a threaded portion 18, which is received in an opening in the moveable block 14, with a flange portion 20 of the bolt being retained in a cavity 22 formed in the body portion 12. The cavity 22 has walls 23a and 23b. The flange portion 20 is located between the threaded portion 18 and a head portion 24, which head portion extends through an opening 26 in the cavity 22 of the body portion 12. A stud 28 is located on an upper face of the moveable block 14 above the bolt 16. In use, anti-clockwise turning of the bolt 16 first causes the head portion 24 of the bolt 16 to move through the opening 26 and second, causes the moveable block 14 to move upwards through the body portion 12 causing the stud 28 to protrude from the body portion 12 (see Figure 3). Both the head portion 24 and stud 28 project into openings in a first section of tubing to lock the spigot in the tubing.

A second bolt 16a is located at the opposite end of the spigot 10 and extends into the moveable block 14 in the same way as the bolt 16. The bolt 16a also has a flange 20a which is retained in the cavity 22 and extends through an opening 26a as described above. The moveable block also includes a second stud 28a above the bolt 26a.

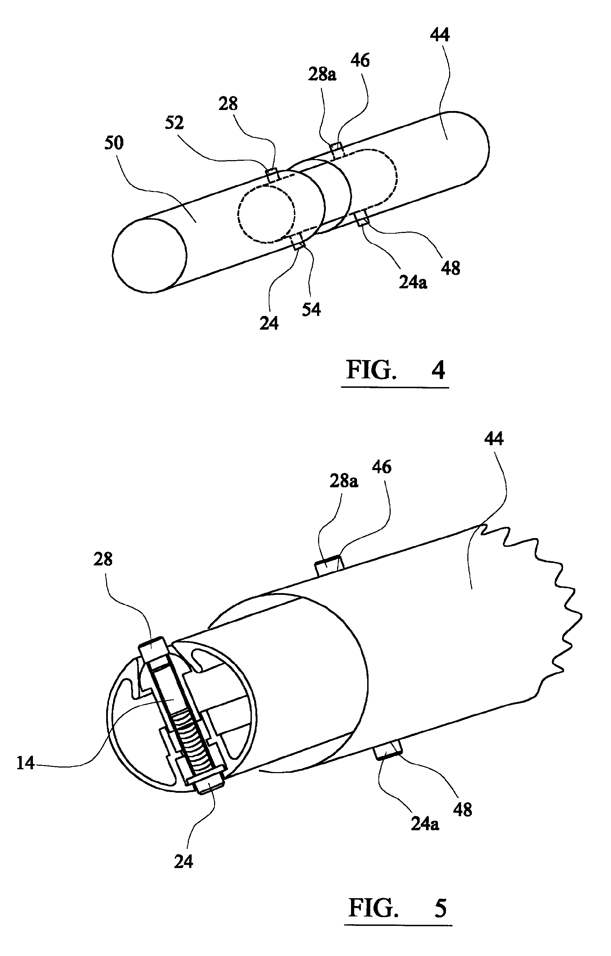

The bolt 16a, in particular a head portion 24a, and the stud 28a are moveable in the same way as the bolt 16 and stud 28, but are intended to secure a second piece of tubing relative to the spigot in an abutting relationship with the first piece of tubing, see Figure 5.

Thus, one end of the spigot is used to secure the first section of tubing 14 in position with bolt head 24 and stud 28 and the other end of the spigot is used to secure the second section of tubing 50 in position with bolt head 24a and stud 28a.

The following parts of the description describe the action of the bolt 16, moveable bock 14 and stud 28. The description is equally applicable to the bolt 16a and its flange 20a, the moveable block 14 and the stud 28a.

In more detail, the head portion 24 of the bolt 16 has a hexagonal key fitting and has a diameter slightly less than the diameter of the opening 26 so that the head portion 24 can easily pass therethrough.

The flange 20 has a diameter greater than that of the opening 26 so that the flange 20 can not pass therethrough.

The opening 26 has a diameter of approximately 10 mm, with the flange 20 having a diameter of approximately 12 mm and the head portion 24 of the bolt 16 having a diameter of approximately 9 mm.

The cavity 22 also has an opening 30 at an upper side thereof. The threaded portion 18 of the bolt 16 extends through the opening 26 and into a correspondingly tapped opening in the moveable block 14. The moveable block 14 has a width of approximately 15 mm and so cannot pass through the upper opening 30 in the cavity 22. The thread may be a double thread to create more travel for a given number of turns.

As shown in Figure 5, the expandable spigot 10 is elongate, with the cavity being in the shape of an elongate lozenge. The opening 26 is circular as mentioned above, but the opening 30 forms an elongate slot which runs the length of the expandable spigot 10.

The moveable block 14 is prevented from moving laterally by vertical arms 32a and 32b of the body portion 12 which extend towards the centre of the body portion 12 from the cavity wall sections 23a/b. The moveable block 14 is elongate with a rounded head section from which the stud 28 projects, as shown in Figure 5. Also, it is housed between the vertical arms 32a and 32b in the elongate central cavity 34 in the body portion 12. Vertical movement of the moveable block 14 is constrained at its lower end by abutment of the block 14 with the walls of the cavity 22 and at its upper end by abutment with flexible locking members 36 and 38. The stud 28 extends away from the moveable block 14 such that it projects above the flexible locking members 36/38 when in an unextended, unlocked configuration described below, see Figure 1. The stud 28 extends away from the moveable block 14 such that it projects to about level with or just below the flexible locking members 36/38 when the moveable block 14 is abutted against the flexible locking members (see Figure 3), in an extended, locked configuration.

The flexible locking members 36/38 are operable to flex by virtue of their respective neck portions 37 and 39, when respective heads 40/42 are pushed outwards by movement of the moveable block 14 acting as a wedge between them.

In use, the expandable spigot 10 is partially inserted into a section of tubing 44 until the head portion 24 of the bolt 16 and the stud 28 are aligned with openings 46 and 48 in the section of tubing 44. The openings have a diameter approximately the same or just larger than the opening 26 in the body portion 12.

A suitable tool e.g. with a hexagonal key head is then inserted into the head portion 24 of the bolt 16. The bolt 16 is turned in an anti-clockwise direction which causes the head portion 24 to move out of the opening 26 and project out of the opening 46 in the tubing 44. The bolt 16 is twisted until the flange 20 abuts the lower edge of the cavity 22 at the opening 26.

Further twisting of the bolt in an anti-clockwise direction results in the flange 20 bearing against the opening 26 and, whilst still twisting, causes the threaded portion 18 to twist out of the moveable block 14. Given that the bolt 16 cannot move outwards because the flange 20 bears against the opening 26, the moveable block 14 is forced to move upwards in reaction to the force of the flange 20 on the opening 26, as shown by the arrow in Figure 3.

As the moveable block 14 moves upwards whilst the bolt 16 is turned, the moveable block 14 bears against the heads 40/42 of the flexible locking members 36/38. The rounded head allows progressive engagement with the flexible locking members, as they are caused to separate. Continued movement of the moveable block 14 forces the heads 40/42 outwards towards the internal walls of the tubing 44. As the moveable block 14 moves upwards the stud 28 projects through the opening 48 in the tubing 44 to lock the spigot in position in the tube.

The relative dimensions of the stud 28 and the width of the moveable block 14 together with the flexible locking members 36/38 are chosen so that when the flexible locking members 36/38 are pushed hard against the internal walls of the tubing 44 the stud 28 projects above an outer surface of the tubing 44 by about 1 mm.

The expandable spigot 10 is then inserted into the end of a second piece of tubing 50. The bolt 16a and the stud 28a are aligned with openings 52 and 54 respectively and the bolt 16a is tightened in the same way as described above in relation to bolt 16. The bolt 16a has the same effect on the moveable block 14. Thus, anti-clockwise turning of the bolt 16a causes the expandable spigot 10 to expand inside the section of tubing 50 to thereby lock the expandable spigot 10 in position and so secure the two sections of tubing 44 and 50 together.

The moveable block 14 acts as a wedge driving the flexible locking members 36/38 apart. The initial shape of the body portion 12 is chosen so that when the flexible members 36/38 are in their locked position (as shown in Figure 3) the external shape of the body portion 12 is approximately circular so that as far as it is possible the body portion 12 bears against the interior wall of the tubing 44 around all of its circumference. Due to inaccuracies in the manufacture of the body portion and tubing will soon mean consistencies may arise, resulting in gaps between the interior wall of the tubing and the exterior of the body portion 12, but those gaps should be minimised wherever possible.

The pressure of the flexible locking members in the interior of the tube provides a first means by which the spigot locks the tube in position. The projection of the bolt head 24 and stud 28 through openings in the tube provides a second means of locking.

The result of the body portion 12 having an approximately circular external shape when in the locked position, to match the circular interior of the tubing 44 results in the flexible locking members 36/38 leaning inwards from a circle when the moveable block 14 is in its lowered position with the flexible locking members 36/38 being unflexed.

The moveable block 14 is elongate and receives both the bolts 16 and 16a in tapped openings. The provision of an elongate block allows the locking members 36/28 to be flexed outwards along their entire length (since they are elongate also), for increased holding power for the tubes.

The body portion 12 is not necessarily used with a tubing of circular cross-section, but when a different shape of tubing is used the body portion 12 will be produced to match the interior shape of the tubing, e.g. an oval shaped body portion for an oval shaped section of tubing.

The body portion 12 is made by an extrusion process by manufacture of a suitable dye. The body portion 12 may be made of aluminium, or steel, as the may the tubing.

Other bolt heads other than hexagonal fittings may be used as would be known to the skilled man.

The expandable spigot disclosed herein has significant advantages over prior art expandable spigots because the expandable spigot need only be tightened from one side, whereas previously tightening at both sides has been needed. Also, the problems with an inaccurate fit of an extruded spigot have been addressed by use of flexible locking members which can move into the correct position, to allow for any inaccuracies in size or shape of corresponding parts of a spigot and the tubing into which it is to be fitted. The provision of an expandable spigot having the features mentioned above provides a very strong join between two sections of tubing.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. An expandable spigot comprises an elongate body portion and first locking means, wherein the body portion is adapted to be partially inserted into an end of a first tube, and partially into an end of a second tube wherein the first locking means are operable to be extended outwards from the body portion and to project into the first and second tubes to thereby hold said tubes in position relative to the expandable spigot.

2. An expandable spigot as claimed in claim 1, in which the first locking means comprises at least two locking members for each tube to be held in position, which locking members extends outwards from different locations on the body portion.

3. An expandable spigot as claimed in claim 2, in which the two locking members of a pair extend outwards upon actuation of one adjustment means.

4. An expandable spigot as claimed in either claim 2 or claim 3, in which the locking members are operable to extend outwards one after the other, upon continued activation of the adjustment means.

5. An expandable spigot as claimed in any one of claims 2 to 4, in which the first locking means comprises a first locking member being threaded and being received in a corresponding tapped opening the other locking member.

6. An expandable spigot as claimed in claim 5, in which turning of the first locking member causes that locking member to extend outwards from the body portion.

7. An expandable spigot as claimed in claim 6, in which further turning in the same direction causes a flange in the first locking member to bear against the body portion, thereby preventing further protrusion of the first locking member and thereby causing the second locking member to move away therefrom and extend outwards from the body portion.

8. An expandable spigot as claimed in any one of claims 2 to 7, which includes second locking means, comprising two flexible locking members.

9. An expandable spigot as claimed in claim 8, in which the flexible locking members are located on the periphery of the body portion, forming part of an outer surface thereof.

10. An expandable spigot as claimed in either claim 8 or claim 9, in which extension of the second locking member is operable to urge the flexible locking members outwards.

11. An expandable spigot as claimed in claim 10 in which the flexible locking members are urged against an inner wall of the tube.

12. An expandable spigot as claimed in any one of claims 2 to 11, in which turning of the adjustment means in the opposite direction causes both locking members to retract.

13. An assembly comprising an expandable spigot as described in relation to any one of claims 1 to 12 and two pieces of tubing for fixing with said spigot.

14. A method of fixing first and second tubes together comprises placing a first end of an expandable spigot into an end of a first tube and causing a first section of a first locking means to extend outwards and project into the first tube to thereby hold the first tube relative to the spigot, and placing a second end of the expandable spigot into an end of a second tube and causing a second section of the first locking means to extend outwards and project into the second tube to thereby hold the second tube relative to the spigot and therefore hold the first tube relative to the second tube.

15. An expandable spigot comprises a body portion and second locking means, wherein the body portion is adapted to be partially inserted into an end of a first tube and partially inserted into an end of a second tube, and wherein the second locking means are operable to be extended outwards towards inner walls of the tubes by the action of a wedge member urging flexible locking members apart to thereby create a friction fit between the expandable spigot and the tubes.
